# EUROPÄISCHE PATENTSCHRIFT

(11) **EP 1 279 449 B1**
(45) Veröffentlichungstag und Bekanntmachung des Hinweises auf die Patenterteilung: **23.02.2005**
(21) Anmeldenummer: 02012247.9
(22) Anmeldetag: 04.06.2002
(51) Int. Cl.: B21D 39/04, B23P 11/02

(54) **Verfahren zum Verbinden zweier Bauteile**
Method for connecting two objects
Méthode pour joindre deux objets

(30) Priorität: 13.07.2001 DE 10134086
(43) Veröffentlichungstag der Anmeldung: 29.01.2003
(60) Teilanmeldung: 04014286.1
(73) Patentinhaber: DaimlerChrysler AG, 70567 Stuttgart (DE)
(72) Erfinder: Spielmannleitner, Christian, 20257 Hamburg (DE)

(56) Entgegenhaltungen:
- EP-A- 0 673 697
- DE-A- 19 830 623
- US-A- 3 889 354
- US-A- 3 977 068

## Beschreibung

Die Erfindung betrifft ein Verfahren zum Verbinden zweier Bauteile nach dem Oberbegriff des Patentanspruches 1.

Ein gattungsgemäßes Verfahren. ist beispielsweise aus der US 3,977,068 bekannt. Hierbei wird ein rohrförmiges Bauteil in ein Durchgangsloch eines plattenförmigen Bauteils mit Spiel geschoben, wonach in das rohrförmige Bauteil eine Aufweitlanze eingeführt wird, mittels derer durch fluidischen Innenhochdruck das rohrförmige Bauteil derart plastisch aufgeweitet wird, dass es sich an die Innenseite des Durchgangsloches des plattenförmigen Bauteiles anlegt. Dieses wird im Bereich des Loches ebenfalls aufgeweitet, jedoch nur im Rahmen der Werkstoffelastizität. Nach Entspannen des Innenhochdruckes federt die Lochwandung elastisch zurück, so dass sich zwischen dem rohrförmigen und dem plattenförmigen Bauteil im Lochbereich ein nahezu unlösbarer Presssitz ergibt. Die Aufweitlanze wird durch einen Stab aus einem starren Vollmaterial, vorzugsweise aus Stahl gebildet, welcher einen axial verlaufenden Druckkanal zur Führung des Druckfluides aufweist. Der axiale Druckkanal ist eine Sackbohrung und mündet kurz vor seinem Ende in zwei radial abgehende Kanäle, die ihre Ausmündungen am Mantel des Stabes besitzen. Die Ausmündungen liegen in Gebrauchsstellung der Aufweitlanze innerhalb des aufzuweitenden Bereiches des rohrförmigen Bauteils. Dieser wird axial durch zwei voneinander beabstandeten Ringdichtungen hochdruckfest abgedichtet, die in zwei am Mantel des Stabes eingearbeiteten Ringnuten eingebracht sind.

Da die Aufweitlanze in ein rohrförmiges Bauteil eingeführt wird und aus Festigkeitsgründen einen bestimmten vom aufzubringenden Hochdruck abhängigen Mindestquerschnitt aufweisen muss, muss zwangsweise das innere Bauteil ebenfalls einen inneren Mindestdurchmesser besitzen. Die Anwendbarkeit auf innere Bauteile mit geringerem Innendurchmesser ist damit mit der bekannten Technik nicht möglich. Außerdem ist durch die Notwendigkeit des Einführens der Aufweitlanze die Voraussetzung festgelegt, dass das innere Bauteil hohl sein muss. Aufgrund der beschränkten Langzeitfestigkeit der Aufweitlanze, insbesondere bei dünneren Exemplaren, führt ein Serieneinsatz der Lanze durch den häufigen Werkzeugwechsel infolge des Werkzeugverschleißes und die damit verbundenen Ausfallzeiten zu einem relativ teueren Herstellungsprozess der Fügeverbindung.

Der Erfindung liegt nun die Aufgabe zugrunde, ein gattungsgemäßes Verfahren dahingehend weiterzubilden, dass in relativ einfacher Weise und prozesssicher Bauteile ohne Einschränkung hinsichtlich der Mindestgröße eines Innendurchmessers der Bauteile und hinsichtlich der Gestaltung des inneren Bauteils miteinander verbunden werden können.

Die Aufgabe ist erfindungsgemäß durch die Merkmale des Anspruches 1 gelöst.

Aufgrund dessen, dass die umformende Beaufschlagung von außen kommt, entfällt das Erfordernis eine Aufweitlanze in ein inneres Bauteil einzuführen. Mit Entfall der Aufweitlanze ergeben sich auch für den Herstellungsprozess der Fügeverbindung zwischen den beiden Bauteilen keine Probleme hinsichtlich einer Standfestigkeitsbetrachtung, d.h. eines Verschleißes des einzuführenden Werkzeuges. Dadurch werden gleichzeitig die laufenden Kosten für die Herstellung der Verbindung verringert. Des weiteren entfällt die Abhängigkeit der Formgebung des inneren Bauteils von einem Mindestquerschnitt der Lanze. So können die inneren Bauteile nun polygonal, rohrförmig, unsymmetrisch, mehrfach gebogen oder gar aus Vollmaterial sein. Die einzigen notwendigen Kriterien für die prozesssichere Herstellung der Fügeverbindung sind zum einen die Aufschiebbarkeit des äußeren Bauteils auf das innere und zum anderen die Abstimmung der Materialien und ggf. der Wandstärken der Bauteile aufeinander, derart, dass bei der Druckfluidbeaufschlagung das äußere Bauteil plastisch und das innere Bauteil elastisch umgeformt wird. Somit besteht das Erfordernis in dem Bestehen einer umfänglich geschlossenen Öffnung des äußeren Bauteils, in oder durch das das innere geschoben oder gesteckt wird, und in der elastischen Rückfederung des Materials des inneren Bauteils nach außen gegen das plastisch geschrumpfte äußere Bauteil nach Entspannung des Druckfluides. Hieraus ergibt sich der erfindungsgemäß angestrebte Presssitz zwischen den beiden Bauteilen, der in seiner Festigkeit in vorteilhafter Weise auf den jeweiligen Anwendungszweck hin durch eine variable Steuerung der Höhe des Fluiddruckes abgestimmt werden kann, so dass damit zwischen einer Unlösbarkeit und einer ab einem bestimmten axialen mechanischen Zug oder Druck oder einem Drehmoment bedingten Lösbarkeit des Presssitzes, beispielsweise für eine Überlastsicherung, gezielt alle Stärken des Presssitzes einstellbar sind. Die Langzeitfestigkeit der Vorrichtung ist durchaus gegeben, da die Massivheit des Umformwerkzeuges verfahrensbedingt beliebig gewählt werden kann. Lediglich die konstruktive Machbarkeit von Dichtungsanordnungen hinsichtlich ihrer Miniaturisierung bestimmt die Kleinheit des Außendurchmessers der Bauteile. Somit können im Vergleich zu bekannten gattungsgemäßen Verfahren wesentlich kleinere Bauteile miteinander gefügt werden.

Zweckmäßige Ausgestaltungen der Erfindung können den Unteransprüchen entnommen werden; im übrigen ist die Erfindung anhand eines in den Zeichnungen dargestellten Ausführungsbeispieles nachfolgend näher erläutert; dabei zeigt:
- Fig. 1: in einem seitlichen Längsschnitt ein Umformwerkzeug für das erfindungsgemäße Verfahren ohne zu fügende Bauteile,
- Fig. 2: in einem Querschnitt ein äußeres und ein inneres Bauteil in Schiebelage vor dem Erzeugen eines Presssitzes,
- Fig. 3: im Querschnitt die Bauteile aus Fig. 2 nach dem Erzeugen des Presssitzes.

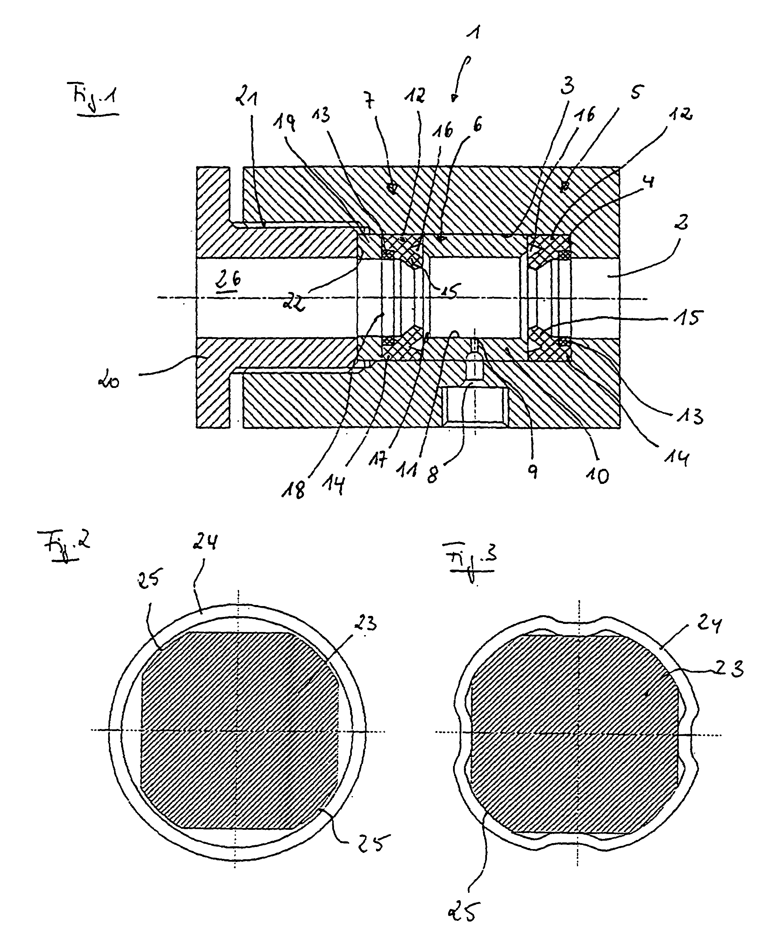

In Fig. 1 ist ein Umformwerkzeug 1 einer Vorrichtung zum Verbinden zweier Bauteile mittels fluidischen Hochdruckes dargestellt, das massiv und einstückig ausgebildet ist und eine Durchführung aufweist, die die Werkzeuggravur 2 bildet. Anstatt der einfachen apparativen Gestaltung der Einstückigkeit kann das Umformwerkzeug 1 auch in ein Ober- und ein Untergesenk geteilt sein, was Vorteile in der Zugänglichkeit zu den zu fügenden Bauteilen, insbesondere dann, wenn die Bauteile im Schiebeverbund in das Umformwerkzeug 1 eingebracht werden und dabei exakt zueinander axial und/oder radial positioniert bleiben müssen, erbringt. In die Gravur 2 ist eine umlaufende Aussparung 3 eingearbeitet, die axial einseitig offen ist. Die Aussparung 3 nimmt zwei Dichtungsanordnungen 5 und 7, sowie eine diese voneinander beabstandende Distanzhülse 6 auf. An der axialen Anschlagfläche 4 der Aussparung 3 stützt sich die Dichtungsanordnung 5 ab, an dieser axial die Distanzhülse 6 und an dieser wiederum axial die weitere Dichtungsanordnung 7 ab. Obwohl die Dichtungsanordnungen 5 und 7 auch in axial voneinander getrennten Ringnuten der Gravur 2 einsetzbar wären und eine Distanzhülse 6 entfallen würde, bietet die dargestellte Lösung eindeutige Vorzüge in der Einsetzbarkeit bzw. Austauschbarkeit der Dichtungsanordnungen 5 und 7 bei Verschleiß der Dichtungsanordnungen oder bei Verwendung andersartiger - größerer oder kleinerer - Dichtungsanordnungen im Falle des Anwendungswechsels auf größere oder kleinere Bauteile oder auf Bauteile anderer Querschnittsform.

Das Umformwerkzeug 1 weist einen Druckkanal 8 auf, der einerseits an einen externen Fluidhochdruckerzeuger angeschlossen ist und von außen in die den Schiebeverbund aufnehmende Gravur 2 des Werkzeuges 1 führt. Die Ausmündung 9 des Druckkanals 8 ist an der Stelle des herzustellenden Presssitzes gelegen. Dabei führt der Druckkanal 8 in einfacher Weise durch die Wandung 10 der Distanzhülse 6 hindurch, deren Innenseite 11 den überwiegenden Teil der Gravur 2 des Umformwerkzeuges 1 entlang der Stelle des herzustellenden Presssitzes bildet, was die Gestaltung des Umformwerkzeuges 1 vereinfacht und die Kompaktheit des Werkzeuges 1 vergrößert. Um eine möglichst gleichmäßige Druckbeauschlagung des Schiebeverbundes an der Stelle des herzustellenden Presssitzes zu erreichen, kann in die Gravur 2 im Falle des Fehlens einer Distanzhülse 6 oder in die Innenseite 11 der Distanzhülse 6 eine umlaufende Ausnehmung eingearbeitet sein, in die der Druckkanal 8 ausmündet und die entlang der Stelle des herzustellenden Presssitzes verläuft. Dies ist besonders vorteilhaft, wenn der Schiebeverbund eng an der Gravur 2 bzw. der Innenseite 11 der Distanzhülse 6 anliegt.

Denkbar ist auch, dass die Ausmündung 9 des Druckkanals 8 oder die besagte Ausnehmung zur Gravur 2 hin von einer elastischen Membran abgedeckt ist, die an der Gravur 2 oder der Innenseite 11 der Distanzhülse 6 befestigt ist. Mittels der Membran wird eine trockene Umformung des Schiebeverbundes erreicht, wobei sich bei Fluiddruckerzeugung die Membran druckvermittelnd an das äußere Bauteil des Schiebeverbundes anlegt. Dies ist zum einen zur Schonung korrosionsempfindlicher Bauteilmaterialien und zum anderen zur Ressourcenschonung vorteilhaft. Darüber hinaus kann in werkzeugvereinfachender Weise auf Dichtungsanordnungen verzichtet werden.

Die Dichtungsanordnungen 5 und 7 beinhalten einen elastischen Dichtring 12 aus einem thermoplastischen Elastomer, dessen geringer Abrieb beim Einschieben und Herausziehen des Schiebeverbundes der Bauteile eine hohe Langzeitbeständigkeit garantiert, und der einen auf der Seite, die der Stelle des herzustellenden Presssitzes abgewandt ist, anliegenden Stützring 13 aus einem Werkstoff hoher Shore-Härte beinhaltet. Der Stützring 13 besteht aus hochdruckfestem Material, ist radial elastisch und besitzt in axialer Richtung eine sehr hohe Zugfestigkeit. Als Werkstoff für den Stützring 13 ist Bronze oder ein Federstahl denkbar. Als besonders günstig bezüglich der Erfüllung der Anforderungen an den Stützring 13 hat sich der Einsatz von einem linearen aromatischen Polymer oder einem Polyoxylenmethylenplastomer ergeben. Der Stützring 13 wird von einem axial abstehenden Bund 14 des Dichtringes 12 umgeben, wodurch der mit Vorspannung befestigte Stützring 13 den Dichtring 12 an der Stelle des Bundes 14 radial gegen die Wandung der Aussparung 3 anpresst und damit dem Dichtring 12 einen zusätzlichen Halt in der Aussparung 3 gibt. Der Dichtring 12 weist des weiteren eine umlaufende in die Gravur 2 des Umformwerkzeuges 1 und entgegen der Richtung der axialen Druckkomponente des das äußere Bauteil umformenden Hochdruckes schräg abragende Dichtlippe 15 auf, die vom Stützring 13 axial gestützt wird um Spaltextrusionen des Dichtringes 12 in den Spalt, der zwischen dem Schiebeverbund und der Gravur 2 außerhalb der Hochdruckbeaufschlagung besteht und in dem Atmosphärendruck herrscht, bei der Fluidhochdruckerzeugung zu vermeiden und damit den Verschleiß des Dichtringes 12 zu minimieren.

Die Dichtlippe 15 besitzt einen kleineren Außendurchmesser als der Außendurchmesser des Schiebeverbundes. Dadurch wird die Dichtlippe 15 beim Einschieben des Schiebeverbundes oder der einzelnen Bauteile in die Gravur 2 des Umformwerkzeuges 1 von dem Schiebverbund bzw. von dessen Bauteilen zurückgebogen, so dass der Dichtring 12 außen am äußeren Bauteil des Schiebeverbundes unter Vorspannung anliegt und damit eine Dichtwirkung schon vor dem Fluiddruckaufbau aufbringt. Darüber hinaus überbrückt die Dichtlippe 15 den sich bei der plastischen Umformung des äußeren Bauteils vergrößernden Spalt zwischen der Innenseite 11 der Distanzhülse 6 und dem äußeren Bauteil durch elastische Rückfederung in ihre Ausgangslage entsprechend der Nicht-Gebrauchsstellung vor dem Einschieben des Schiebeverbundes. Hierbei können in vorteilhafter Weise relativ große Spalte hochdruckdicht überbrückt werden. In den Dichtring 12 ist eine in axialer Richtung zur Distanzhülse 6 hin offene kerbförmige Ringnut 16 eingearbeitet, deren äußere Flanke die Oberseite der Dichtlippe 15 bildet. Durch die Ringnut 16 wird der Dichtlippe 15 ausreichend Elastizität gegeben, um sich zur Gewährleistung ausreichender Dichtfähigkeit möglichst gut an dem äußeren Bauteil des Schiebeverbundes anlegen zu können. Hierbei soll die Tiefe der Ringnut 16 nicht so groß bemessen sein, dass eine Rissgefahr des Dichtringes 12 auftritt, jedoch groß genug sein, um ausreichende Elastizität der Dichtlippe 15 zu sichern. Die Distanzhülse 6 weist stirnseitig auf beiden Seiten eine umlaufende Fase 17 auf, über die der Druckkanal 8 mit der Ringnut 16 des Dichtringes 12 fluidisch verbindbar ist. Bei Fluidhochdruckerzeugung wird dadurch die Dichtlippe 15 mittels des Druckfluides zusätzlich über die Ringnut 16 beaufschlagt, so dass diese unter Bildung völliger Hochdruckdichtigkeit mit hoher Kraft an das äußere Bauteil des Schiebeverbundes gepresst wird. Hierbei zeigt sich die Neigung der Dichtlippe 15 von Vorteil, da eine radiale Komponente des Fluidhochdruckes auf die Lippe 15 wirken kann.

Am offenen Ende 18 der Aussparung 3 ist ein aus einem unelastischen Material bestehender Abschlussring 19 angeordnet, der axial abstützend an der Dichtungsanordnung 7 anliegt. Die Vorrichtung beinhaltet des weiteren einen Axialstempel 20, mittels dessen der Abschlussring 19 beaufschlagbar ist. Der Axialstempel 20 ist in eine sich an das offene Ende 18 der Aussparung 3 anschließende querschnittserweiterte Bohrung 21 eingeführt und hält die Dichtungsanordnungen 5 und 7 sowie die Distanzhülse 6 entgegen dem Hochdruck bei der Herstellung der Fügeverbindung in Position, in dem er den Abschlussring 19 abstützt. Der Abschlussring 19 als Einzelteil ist infolge des konisch zulaufenden Bohrungsauslaufes erforderlich und überbrückt den mit dem Auslauf zusammenhängenden Abstand zwischen der Dichtungsanordnung 7 und der Stirnseite 22 des Axialstempels 20. Es ist auch denkbar, mittels des Axialstempels 20 schon vor dem Aufbau des fluidischen Hochdruckes eine Axialkraft auf die Dichtungsanordnungen 5 und 7 wirken zu lassen. Bei eingeschobenem Schiebeverbund werden diese infolge ihrer Elastizität durch den Stempel 20 axial zusammengepresst, wodurch sich die Dichtringe 12 radial nach innen ausdehnen und an den Schiebeverbund mit erheblich Kraft anlegen, was schon vorab, d.h. vor Fluidhochdruckaufbau zu einer hohen Dichtwirkung führt. Um dem hohen Fluiddruck Widerstand leisten zu können, wird der Axialstempel 20 hydraulisch betätigt. Im dargestellten Ausführungsbeispiel jedoch wird die Hydraulik eingespart, dadurch, dass der Axialstempel 20 in Form einer Hohlschraube ausgebildet ist, die in ein Innengewinde der Bohrung 21 eingeschraubt ist. Alternativ ist dazu denkbar, dass der Axialstempel 20 und die Bohrung 21 so gestaltet sind, dass sie nach Art eines Bajonettverschlusses zusammenwirken.

Vorteilhafterweise können die Dichtungsanordnungen 5 und 7 in ein Dichtungsmodul integriert sein, das in eine umlaufende Aussparung der Gravur 2 des Umformwerkzeuges 1 einsetzbar ist. Das Modul beinhaltet des weiteren neben den Dichtungsanordnungen 5 und 7 die Distanzhülse 6, die die beiden Dichtungsanordnungen 5 und 7 voneinander beabstandet, und einen Träger für die Dichtungsanordnungen 5,7 und die Distanzhülse 6. Hierdurch ist in einfacher Weise möglich, die Vorrichtung auf unterschiedliche Anwendungszwecke maßgeschneidert umzurüsten. Dabei müssen nur vormontierte Module vorhanden sein, die dann dem Umformwerkzeug 1 schnell entnommen und ausgetauscht werden können. Somit können die Dichtungsanordnungen 5 und 7 und die Distanzhülse 6 als Gesamtheit ausgetauscht werden und brauchen nicht einzeln entnommen und befestigt zu werden. Weiterer Bestandteil des Moduls kann auch der Abschlussring 19 sein, da dieser auf den Durchmesser der Dichtungsanordnung 7 abgestimmt sein und daher mit Austausch dieser Anordnung ebenfalls gewechselt werden muss.

Das Verfahren zum Verbinden zweier Bauteile mittels fluidischen Hochdruckes verläuft wie folgt. Zwei Bauteile, ein inneres 23 und ein äußeres 24, werden in geeigneter Weise aufeinander geschoben werden, so dass eine Überlappung oder gar eine vollständige Überdeckung der beiden Bauteile 23,24 erreicht wird, die dabei im Schiebesitz lose miteinander verbunden sind (Fig. 2). Das innere Bauteil 23 kann hohl ausgebildet sein, besteht hier jedoch aus Vollmaterial und besitzt einen polygonalen Querschnitt, wobei die Ecken miteinander durch eine Wölbung 25 des Vollmaterials verbunden sind. Diese Wölbung 25 ermöglicht beim späteren Anpressen des äußeren Bauteils 24 eine sanfte Anlage und verhindert gleichzeitig eine bauteil- und verbindungsschädigende Kerbwirkung. Das Bauteil 23 kann alternativ auch jede andere Form aufweisen. Das Bauteil 24 ist hier zylindrisch ausgebildet, kann jedoch auch andere Hohlquerschnittsformen aufweisen. Der Schiebeverbund kann außerhalb des Umformwerkzeuges 1 hergestellt werden und anschließend in das Umformwerkzeug 1 eingeschoben - oder bei geteiltem Werkzeug 1 eingelegt -werden. Denkbar ist auch den Schiebeverbund erst im Umformwerkzeug 1 zu bewerkstelligen, wobei es konstruktiv erforderlich ist, die einzelnen Bauteile 23 und 24 von beiden Seiten des Umformwerkzeuges 1 in dessen Gravur 2 einschieben zu können. Die Einbringung des Schiebeverbundes in die Gravur 2 kann auch bei geschlossenem Umformwerkzeug 1 erfolgen, d.h., wenn der Axialstempel 20 in die Bohrung 21 eingeführt oder eingeschraubt ist und an dem Abschlussring 19 stirnseitig anliegt. Bei längeren Bauteilen 23, 24 oder bei der Herstellung des Schiebeverbundes im Werkzeug 1 besitzt im Falle des geschlossenen Werkzeuges 1 der Axialstempel 20 eine axiale Durchgangsöffnung 26, die mit der Gravur 2 des Werkzeuges 1 und der Distanzhülse 6 fluchtet und durch die der Schiebeverbund oder eines der beiden Bauteile 23,24 durchgeführt werden.

Alsdann wird ein fluidischer Hochdruck aufgebracht, in dem der externe Fluidhochdruckerzeuger betätigt wird und ein Druckfluid über den Druckkanal 8 auf den Schiebeverbund zwischen den Dichtungsanordnungen 5 und 7 führt. Das Druckfluid wird dann soweit gespannt, bis ein Umformdruck erreicht wird, bei dem sich das äußere Bauteil 24 des Schiebeverbundes, dessen Werkstoff eine geringere Streckgrenze aufweist als der des inneren Bauteils 23, derart plastisch verformt, dass es quasi auf das innere Bauteil 23 aufschrumpft. Der Umformdruck ist gerade so hoch, dass sich das innere Bauteil 23 nur elastisch verformt, d.h. komprimiert wird. Nachdem das äußere Bauteil 24 derart auf das innere 24 gepresst wurde, wird nun der Hochdruck entspannt, worauf das elastisch komprimierte innere Bauteil 23 und das plastisch verformte äußere Bauteil 24 elastisch zurückfedern. Da die Streckgrenzen der beiden Bauteile 23 und 24 unterschiedlich sind (R_{e,23} > R_{e,24}), federt das Innenteil 23 um einen größeren Betrag zurück als das Außenteil 24. Es bildet sich somit ein Gleichgewichtszustand aus, bei dem das Bauteil 24 unter radialer Zug- und das Bauteil 23 unter Druckspannung steht. Somit ergibt sich an der Trennfläche eine anhaltende Flächenpressung und damit ein starker Fügeverband. Die Bauteile 23 und 24 liegen damit in einem sehr starken Presssitz zumindest an mehreren Umfangsstellen reibschlüssig und aufgrund der Rotationsasymmetrie des gezeigten inneren Bauteils 23 formschlüssig aneinander, so dass sie sowohl in axialer als auch in radialer Richtung aneinander festgesetzt sind (Fig. 3).

Während im dargestellten Ausführungsbeispiel das äußere Bauteil 24 unmittelbar durch das Druckfluid beaufschlagt wird, kann der Hochdruck auch mittels einer an der Gravur 2 oder der Distanzhülse 6 angebrachten Membrane auf das Bauteil 24 übertragen werden. Weiterhin muss das äußere Bauteil 24 mit dem inneren Bauteil 23 nicht zwangsläufig über den gesamten Überlappungsbereiches des Schiebeverbundes verpresst werden sondern je nach Dimensionierung des Abstandes der Dichtungsanordnungen 5 und 7 zueinander nur über einen axialen Teilabschnitt des Überlappungsbereiches. Des weiteren ist im Rahmen der Erfindung denkbar, dass bei der Verwendung eines hohlen, insbesondere röhrenförmigen inneren Bauteils 23 bei dem Erfordernis sehr hoher Umformdrücke das Bauteil 23 innenseitig mir einem massiven Gegenhaltewerkzeug abzustützen. Anderenfalls wird in apparativ und verfahrenstechnisch einfacher Weise das äußere Bauteil 24 an die Außenwandung des inneren hohlen Bauteils 23 abstützungsfrei bezüglich des inneren Bauteils 23 gepresst.

Die Erfindung kann seine Anwendung beispielsweise im Karosseriebau bei Rohbaustrukturen von Fahrzeugen, Lenksäulen oder bei Stoßfängerbiegeträgern finden.

## Patentansprüche

1. Verfahren zum Verbinden zweier Bauteile (23,24) mittels fluidischen Hochdruckes, wobei die Bauteile (23,24) aufeinander geschoben werden und wobei anschließend mittels des Hochdruckes die beiden Bauteile (23,24) aneinander gepresst werden,
**dadurch gekennzeichnet,**
**dass** das äußere Bauteil (24), dessen Werkstoff eine geringere Streckgrenze aufweist als der des inneren Bauteils (23), durch eine von außen auf den Schiebeverbund wirkende Hochdruckbeaufschlagung plastisch verformt wird, wobei das innere Bauteil (23) sich elastisch verformt.

2. Verfahren nach Anspruch 1,
**dadurch gekennzeichnet,**
**dass** das äußere Bauteil (24) unmittelbar durch das Druckfluid beaufschlagt wird.

3. Verfahren nach einem der Ansprüche 1 oder 2,
**dadurch gekennzeichnet,**
**dass** das äußere Bauteil (24) zumindest über einen Teilumfangsbereich formschlüssig an das innere Bauteil (23) angepresst wird.

4. Verfahren nach einem der Ansprüche 1 bis 3,
**dadurch gekennzeichnet,**
**dass** das äußere Bauteil (24) mit dem inneren Bauteil (23) nur über einen axialen Teilabschnitt des Überlappungsbereiches des Schiebeverbundes verpresst wird.

5. Verfahren nach einem der Ansprüche 1 bis 4,
**dadurch gekennzeichnet,**
**dass** das äußere Bauteil (24) an die Außenwandung des inneren hohlen Bauteils (23) abstützungsfrei bezüglich des inneren Bauteils (23) gepresst wird.

## Claims

1. Method for joining two components (23, 24) by means of high fluid pressure, wherein the components (23, 24) are pushed onto one another and the two components (23, 24) are then pressed together by means of the high pressure,
**characterised in that**
the outer component (24), the material of which has a lower yield point than that of the inner component (23) is plastically deformed by a high pressure acting externally on the pushed-together composite, while the inner component (23) is deformed elastically.

2. Method according to claim 1,
**characterised in that**
the outer component (24) is directly subjected to the pressure fluid.

3. Method according to claim 1 or 2,
**characterised in that**
the outer component (24) is positively forced against the inner component (23) over at least part of its circumference.

4. Method according to any of claims 1 to 3,
**characterised in that**
the outer component (24) is pressed to the inner component (23) only over an axial part-section of the overlapping area of the pushed-together composite.

5. Method according to any of claims 1 to 4,
**characterised in that**
the outer component (24) is pressed against the outer wall of the inner hollow component (23) without support relative to the inner component (23).

## Revendications

1. Procédé destiné à l'assemblage de deux pièces (23, 24) au moyen d'une haute pression fluidique, les pièces (23, 24) étant coulissées l'une dans l'autre et les deux pièces (23, 24) étant ensuite pressées l'une contre l'autre au moyen de la haute pression, **caractérisé en ce que** la pièce extérieure (24), dont le matériau a une limite d'élasticité inférieure à celle de la pièce intérieure (23), est déformée plastiquement par une sollicitation de haute pression exercée de l'extérieur sur l'assemblage par coulissement, la pièce intérieure (23) se déformant élastiquement.

2. Procédé selon la revendication 1, **caractérisé en ce que** la pièce extérieure (24) est sollicitée directement par le fluide sous pression.

3. Procédé selon la revendication 1 ou 2, **caractérisé en ce que** la pièce extérieure (24), au moins sur une zone partielle de son pourtour, est pressée contre la pièce intérieure (23) en épousant la forme de celle-ci.

4. Procédé selon l'une quelconque des revendications 1 à 3, **caractérisé en ce que** la pièce extérieure (24) est scellée avec la pièce intérieure (23) uniquement sur un tronçon axial de la zone de chevauchement de l'assemblage par coulissement.

5. Procédé selon l'une quelconque des revendications 1 à 4, **caractérisé en ce que** la pièce extérieure (24) est pressée contre la paroi extérieure de la pièce intérieure (23) creuse, sans appui par rapport à la pièce intérieure (23).
